# EUROPÄISCHE PATENTANMELDUNG

(11) **EP 1 508 420 A2**
(43) Veröffentlichungstag der Anmeldung: **23.02.2005**
(21) Anmeldenummer: 04019547.1
(22) Anmeldetag: 18.08.2004
(51) Int. Cl.: B29C 35/08, B29C 35/02, B29C 33/38, B29C 44/02, B29C 44/58

(54) **Verfahren zum Vulkanisieren von Latex-Schaum und Vorrichtung hierfür**

(30) Priorität: 21.08.2003 DE 10338367
(71) Anmelder: Dames-Willers GmbH, 28195 Bremen (DE)
(72) Erfinder: Szymanska, Jens, 26123 Oldenburg (DE)
(74) Vertreter: Schulz, Klaus, Dipl.-Ing.

(57) **Zusammenfassung**

Bei einem Verfahren zum Vulkanisieren von Latex-Schaum wird der Latex-Schaum in eine Form aus elektrisch nichtleitendem Werkstoff. eingefüllt und der in der Form befindliche Schaum mit elektromagnetischer Wellenenergie im Hochfrequenzbereich auf eine vorgegebene Temperatur erwärmt. Zur optimalen Prozesskontrolle, insbesondere der Anpassung der Erwärmung an unterschiedliche Anforderungen von Rezepturseite, wie Temperaturverlauf und Sicherstellen der optimalen Endtemperatur, sowie zur wirtschaftlichen Gestaltung des Verfahrens, insbesondere in Hinblick auf niedrige Energiekosten, wird während der Erwärmung fortlaufend die Temperatur des Schaums erfasst und bei Erreichen der Vorgabetemperatur die Erwärmung abgebrochen. Die mit dem Schaum gefüllte Form wird zum Ausvulkanisieren des Schaums in einen Wärmespeicher verbracht.

## Beschreibung

### Stand der Technik

Die Erfindung betrifft ein Verfahren zum Vulkanisieren von Latex-Schaum nach dem Oberbegriff des Anspruchs 1 sowie eine Vorrichtung hierfür.

Bei einem bekannten Verfahren zum Vulkanisieren von Latexschaum (DE 39 00 809 A1) wird die Form aus nichtmetallischem Werkstoff vor Einfüllen des Latex-Schaums auf eine Temperatur von 45°C - 100°C gebracht und nach Einfüllen der in der Form befindliche Schaum etwa 3 - 10 min mittels Mikrowellen mit einer Frequenz zwischen 1 - 100 GHz, vorzugsweise zwischen 2 - 25 GHz, erwärmt.

Aus der DE-PS 848 567 ist es bekannt, Kautschukmilch-Schaum in eine nichtmetallische Form einzufüllen und'zum Vulkanisieren der verschäumten Kautschukmilch ein elektrisches Hochfrequenzfeld einzusetzen. Die nichtmetallische Form hat einen Formunterteil, der an seiner Oberseite offen ist und eine vorbestimmte Menge Kautschukmilch-Schaum aufnehmen kann, und einen verhältnismäßig flachen Deckel zum Abdecken des befüllten Formunterteils.

Bei einem bekannten Verfahren zum Aushärten von Stoffen, z.B. Kunststoffkleber, durch Mikrowellenbestrahlung (WO 03/020489 A1) wird während des Härtungsprozesses die Temperatur des auszuhärtenden Stoffes fortlaufend gemessen und zur. Regelung der Leistung der Mikrowellenstrahlung herangezogen. Die Messung der Temperatur des Härteguts erfolgt auf indirektem Wege durch Erfassung der Wärmestrahlung des Härteguts, wozu vorzugsweise ein Pyrometer, z.B. ein Infrarot-Thermometer, eingesetzt wird. Anhand der mit dem Pyrometer gemessenen, vom Härtegut abgestrahlten Energie kann auf dessen Temperatur geschlossen werden.

Bei einem bekannten Verfahren zur Herstellung eines unregelmäßig geformten Profils, z.B. eines elastischen Dichtprofils (DE 101 19 890 A1), aus einem vernetzbaren und/oder polymersierbaren Ausgangsmaterial wird ein durch Extrudieren vorgeformter plastischer Materialstrang unter Ausbildung des Profils thermisch verfestigt. Unmittelbar nach der Verformung wird eine Vernetzung und/oder Polymerisation durch Rundum-Bestrahlung mit elektromagnetischer Strahlung initiiert. Die elektromagnetische Strahlung weist einen wesentlichen Wirkanteil im Bereich des nahen Infrarot, insbesondere im Wellenlängenbereich zwischen 0,8µm und 1,5µm, und eine Leistungsdichte oberhalb von 150 kW/m² auf.

Bei einem bekannten Verfahren zum Herstellen einer kleinporösen tintenimprägnierten Musterstruktur (US-A-5 277 721) ist ein Gemisch aus einem thermoplastischen Harz und einer Tinte in eine von einem Rahmen umgrenzte Matrize oder Gießform eingebracht, das die Vertiefungen der Musterstruktur in der Matrix ausfüllt. Als Harz wird bevorzugt ein Polymer aus Vinylchlorid oder Vinylazetat verwendet. Danach wird eine Hilfsschicht über die Matrize gelegt und die Hilfsschicht mit einer Aluminiumplatte abgedeckt. Die Matrize oder Gießform wird auf eine Temperatur von 110 - 150°C für eine Zeitdauer von 5 - 50 min aufgeheizt und unter Druck gesetzt. Anschließend wird die Gießform gekühlt, z.B. mit Wasser und das Gussstück aus der Gießform entnommen.

Der Erfindung liegt die Aufgabe zugrunde, ein Verfahren zum Vulkanisieren von Latex-Schaum insbesondere hinsichtlich des Energieeinsatzes wirtschaftlicher zu gestalten und eine Vorrichtung zur Durchführung dieses Verfahrens anzugeben.

Die Aufgabe ist erfindungsgemäß durch die Merkmale des Anspruchs 1 bzw. des Anspruchs 10 gelöst.

Das erfindungsgemäße Verfahren hat den Vorteil, dass durch die laufende Temperaturerfassung des im Hochfrequenzfeld erwärmten Latex-Schaums in Verbindung mit dem Abbruch der Erwärmung bei Erreichen der vorgegebenen Temperatur eine exakte Aufheizung des Latex-Schaums auf die zur Vulkanisierung erforderliche Temperatur erfolgt, und zwar unabhängig von dem Volumen des Latex-Schaums bzw. der Größe der mit dem Schaum ausgefüllten Form. Damit ist ein optimaler Prozessverlauf sichergestellt, der auch unterschiedlichen Anforderungen des Schaums von Rezepturseite her Rechnung trägt. Ein zur Zerstörung der Schaumstruktur führendes Überheizen ist ebenso ausgeschlossen, wie ein für eine nicht ausreichende Vulkanisierung verantwortliches Unterheizen. Durch die optimale Prozesskontrolle können aufgrund der exakten Erfassung der Prozesswärme mittels Temperaturmessung problemlos Änderungen der Formenabmessungen, der Mischung des Schaums und der geforderten Aufheiztemperatur vorgenommen werden, ohne dass dies negative Rückwirkungen auf den Vulkanisierprozess hat. Das Verfahren ist daher gegenüber solchen Änderungen sehr flexibel, und die Vorrichtung zur Durchführung des Verfahrens kann äußerst variabel genutzt werden. Beim Erwärmungsprozess wird das Hochfrequenzfeld nur solange aufrecht erhalten, bis die erforderliche Temperatur, ggf. über vorgegebene Temperaturstufen mit kurzfristiger Hochfrequenzabschaltung, erreicht ist. Durch das anschließende Verbringen der erwärmten Form mit dem darin befindlichem Schaum in den Wärmespeicher wird für das für den weiteren Vulkanisierungsprozess erforderliche, zeitlich befristete Aufrechterhalten der vorgegebenen Temperatur des Schaums kaum Energie benötigt, da die Form im Wärmespeicher keine nennenswerte Abwärme abzugeben vermag und damit keine oder keine nennenswerte Energie aufgebracht werden muss, um Abwärmeverluste der Form zu kompensieren. Zusammen mit der gegenüber den herkömmlichen Verfahren stark verkürzten Aufschaltzeit des Hochfrequenzfelds wird damit wesentlich Energie eingespart. Durch die Trennung der Erwärmung des Schaums im Hochfrequenzfeld von der zeitlichen Aufrechterhaltung der erreichen Erwärmungstemperatur im Wärmespeicher wird die z.B. aus Kunststoff hergestellte Form einer zeitlich wesentlich geringeren Belastung durch das Hochfrequenzfeld ausgesetzt, so dass sich die Standfestigkeit der Kunststoffform beträchtlich erhöht. Die höhere Lebensdauer der Formen für das Vulkanisieren des Schaums bringt weitere Einsparungen mit sich.

Durch die in den Ansprüche 2 - 9 aufgeführten Maßnahmen sind vorteilhafte Weiterbildungen und Verbesserungen des im Anspruch 1 angegebenen Verfahrens möglich.

Eine vorteilhafte Vorrichtung zur Durchführung des Verfahren ist in Anspruch 10 angegeben. Vorteilhafte Weiterbildungen und Verbesserungen der Vorrichtung finden sich in den Ansprüchen 11 bis 14.

Eine vorteilhafte Form zur Verwendung in dem erfindungsgemäßen Verfahren ist in den Ansprüchen 15 und 16 vorgestellt.

Die Erfindung ist anhand eines in der Zeichnung dargestellten Ausführungsbeispiels im folgenden näher beschrieben. Es zeigen:
- Fig. 1: ein als Blockschaltbild dargestelltes Ablaufschema für die Herstellung von geformten Artikeln aus Latex-Schaum,
- Fig. 2: eine schematische Darstellung eines Hochfrequenzofens zum Vulkanisieren des Latex-Schaums,
- Fig. 3: eine perspektivische Darstellung einer Form zur Herstellung einer Matratze aus Latex-Schaum.

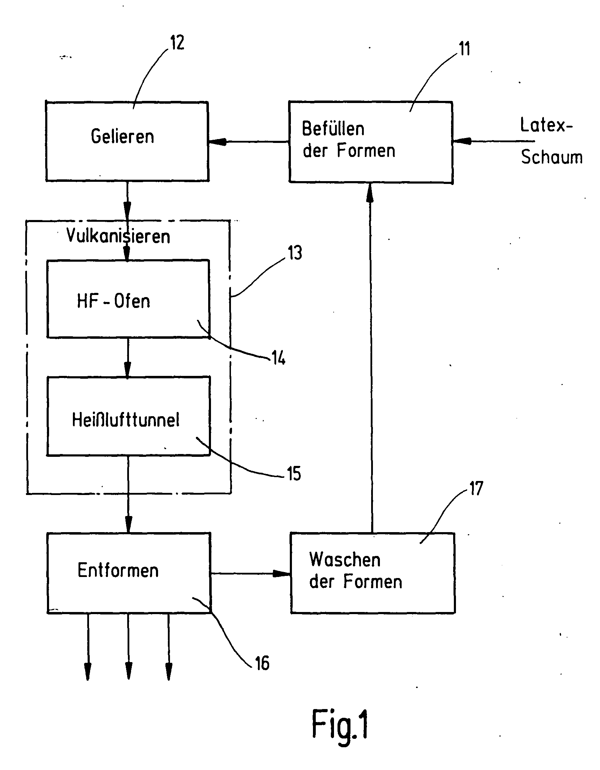

In Fig. 1 sind im Blockschaltbild die verschiedenen Verfahrensstufen des Verfahrens zur Herstellung von geformten Artikeln aus Latex-Schaum, z.B. einer Latex-Schaum-Matratze, dargestellt. Grundlage solcher geformten Artikel ist natürlicher Latex (Kautschuk) oder synthetischer Latex (Styrol-Butadien Rubber) oder Mischungen hieraus, die mit notwendigen Chemikalien, z.B. Beschleunigern,'Schwefel, Zink, Seife und Alterungsschutzmittel, verschäumt werden. Der so hergestellte Latex-Schaum wird an einer Befüllstation 10 in Formen aus nichtleitendem Werkstoff, z.B. aus Kunststoff, eingefüllt. Die Abmessungen der Formen sind an die Abmessungen und Formgebung des jeweils herzustellenden Artikels, z.B. der Matratze, angepasst.

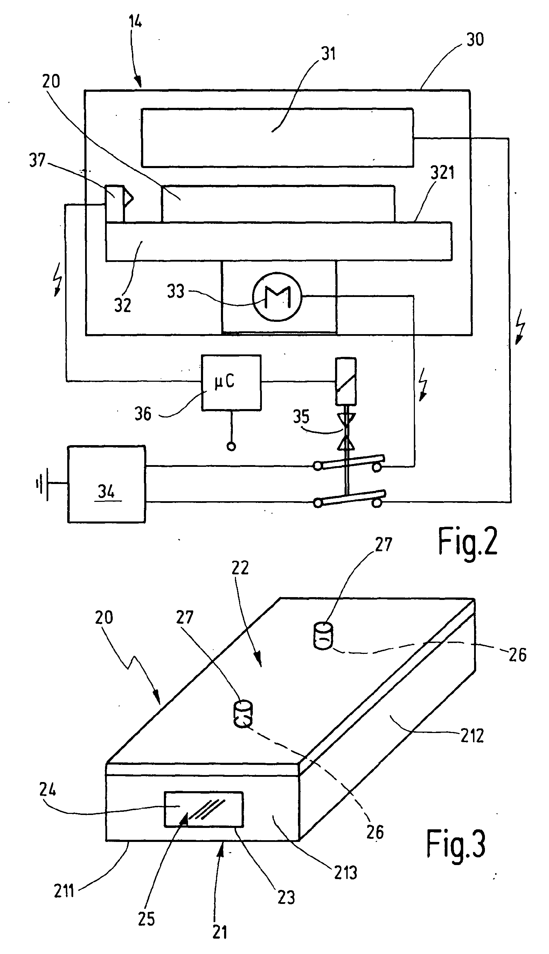

In Fig. 2 ist eine Form 20 zur Herstellung einer Matratze dargestellt. Sie besteht aus einem rechteckigen Formunterteil, der an seiner Oberseite zum späteren Entformen des ausvulkanisierten Latex-Schaums offen ist, und aus einem relativ flachen Deckel 22, der die Oberseite des Formunterteils 21 verschließt. In dem Deckel 22 sind je nach Größe der Form 20 eine oder mehrere Einfüllöffnungen 26 vorgesehen, durch die hindurch die Form mit Latex-Schaum befüllt wird. Nach Befüllen werden die Einfüllöffnungen 26 mit einem nichtmetallischen Verschlussstopfen 27 verschlossen. Der Formunterteil 21 hat einen rechteckförmigen Boden 211 und vier Seitenteile, davon zwei Seitenwände 212 und zwei Stirnwände 213. In einer Stirnwand 213 ist ein Fenster 23 ausgespart, das mit einer infrarotdurchlässigen Scheibe 24 verschlossen ist. Fenster 23 mit Scheibe 24 bilden ein Messfenster 25, durch das hindurch die Wärmestrahlung des in die Form 20 eingefüllten Latex-Schaums gemessen wird.

Die mit Latex-Schaum - im folgenden kurz Schaum genannt - befüllte und geschlossene Form 20 gelangt zunächst in eine Wartestation 12, in der der Schaum infolge von mit der Befüllung dem Schaum zugesetzten Geliermitteln geliert. Danach wird die mit Schaum gefüllte Form 20 in die Vulkanisierstation 13 verbracht. Die Vulkanisierstation 13 umfasst einen noch später im einzelnen erläuterten Hochfrequenzofen 14 und einen Heißlufttunnel 15. Nach Ausvulkanisieren des Schaums wird die Form 20 in die Entformstation 16 verbracht, in der der fertige Artikel aus Schaum, z.B. die Schaum-Matratze, aus der Form 20 entnommen wird. Die leere Form 20 wird in einer Waschstation 17 gereinigt, ggf. mit Trennmitteln besprüht und wiede.r der Befüllstation 11 zum erneuten Befüllen mit Schaum zugeführt.

In der Vulkanisierstation 13 wird der Schaum nach folgendem Verfahren vulkanisiert:

Die mit Schaum gefüllte Form 20 wird im Hochfrequenzofen 14 mit elektromagnetischer Wellenenergie im Hochfrequenzbereich auf eine vorgegebene Temperatur erwärmt. Unter Hochfrequenzbereich wird hier der Frequenzbereich zwischen 10 kHz und 300 GHz verstanden, wobei zur Erzeugung der Wellenenergie sowohl Radiowellen mit einer Frequenz von ca. 27 MHz als auch Mikrowellenstrahlung in einem Frequenzbereich zwischen ungefähr 1 - 30 GHz verwendet werden. Während der Erwärmung wird fortlaufend die Temperatur des Schaums mittels einer Temperaturmessvorrichtung erfasst, und bei Erreichen der Vorgabetemperatur wird die Erwärmung abgebrochen. Unmittelbar danach wird die mit Schaum gefüllte Form 20 zum Ausvulkanisieren des Schaums in den Heißlufttunnel 15 verbracht, der einen Wärmespeicher darstellt und die im Hochfrequenzofen 14 erreichte Temperatur des Schaums für eine gewisse Dauer ohne oder mit nur minimaler Energiezufuhr aufrechterhält. Um eine relativ gleichmäßige Aufnahme der Energie durch den Schaum zu erreichen, wird im Hochfrequenzofen 14 während der Erwärmung die Form 20 oszillierend bewegt, und zwar in einer zum Boden 211 der Form 20 parallelen Ebene in Richtung Längs- und/oder Querachse der Form 20. Zur Temperaturerfassung wird ein Pyrometer, hier ein Infrarot-Sensor, verwendet, der durch das Messfenster 25 hindurch fortlaufend die Wärmestrahlung des sich erwärmenden Schaums misst. Der Infrarot-Sensor 37 wird dabei so angeordnet, dass er mit der oszillierenden Bewegung der Form 20 synchronisiert ist, so dass sein Messabstand zum Messfleck auf der Oberfläche des Schaums konstant bleibt.

In Fig. 2 ist ein Ausführungsbeispiel für den Hochfrequenzofen 14 schematisch dargestellt. In einem Gehäuse 30 ist ein Mikrowellenstrahler 31, der im Frequenzbereich zwischen 3 und 30 GHz arbeitet, sowie ein Formenträger 32 mit einer Aufsetzfläche 321 für mindestens eine Form 20 angeordnet. Mikrowellenstrahler 31 und Formenträger 32 sind so angeordnet, dass die Aufsetzfläche 321 der Mikrowellenstrahlung ausgesetzt ist. Das Gehäuse 30 schirmt die Mikrowellestrahlung gegenüber dem Umfeld ab. Der Formenträger 32 ist von einem Antriebsmotor 33 so antreibbar, dass er eine oszillierende Quer- und/oder Längsbewegung in der Ebenen der Aufsetzfläche 321 ausführt. Der Mikrowellenstrahler 31 und der Antriebsmotor 33 werden aus einer Stromversorgungseinrichtung 34 gespeist und sind mit diesem über einen vorzugsweise elektronischen Schalter 35 verbunden, der in Fig. 2 schematisiert als Schaltrelais mit zwei Schaltkontakten dargestellt ist. Der elektronische Schalter 35 ist mittels eines Mikrocopmuters 36 steuerbar. Die Temperaturmessvorrichtung weist einen Infrarot-Sensor 37 zur Erfassung der Wärmestrahlung und damit der Temperatur des Schaums in der Form 20 auf, der starr mit dem Formenträger 32 gekoppelt, so dass er an dessen oszillierender Bewegung teilnimmt und sein Messabstand vom Messfenster 25 in der Form 20 konstant bleibt.

Ist die mit Schaum gefüllte Form 20 auf den Formträger 32 aufgesetzt und der Infrarot-Sensor 37 auf das Messfenster 25 der Form 20 ausgerichtet, so wird von dem Mikrocomputer 36 eine solche Ansteuerung des Schalters 35 ausgelöst, dass letzterer schließt und damit den Mikrowellenstrahler 31 und Antriebsmotor 33 einschaltet. Durch den Mikrowellenstrahler 31 wird der Schaum in der Form 20 in sehr kurzer Zeit auf eine vorgegebene Temperatur bis zu 100°C erwärmt. Das Ausgangssignal des Infrarot-Sensors 37, das der momentanen Temperatur des Schaums proportional ist, wird als Istwert-Signal im Mikrocomputer 36 mit einem der vorgegebenen Temperatur für die Erwärmung des Schaums entsprechenden Sollwert-Signal verglichen. Sobald das Istwert-Signal das vorgegebene Sollwert-Signal erreicht, wird der Schalter 35 angesteuert, und der Mikrowellenstrahler 31 und der Antriebsmotor 33 werden abgeschaltet. Nach dem Abschalten wird, wie bereits eingangs ausgeführt, die mit Schaum gefüllte Form 20 in den Heißlufttunnel 15 eingefahren, um Abwärmverluste der Form 20 zu vermeiden und den Schaum auf dem benötigten Temperaturlevel zu halten, damit die durch das Erwärmen in Gang gesetzte Vulkanisation abgeschlossen wird.

Für die Vulkanisierungsqualität kann es von Vorteil sein, den Schaum nicht kontinuierlich auf die Vorgabetemperatur aufzuheizen, sondern in Temperaturintervallen, wobei jedem Temperaturintervall eine obere Grenztemperatur zugeordnet wird. Die obere Grenztemperatur des letzten Temperaturintervalls ist dann die Vorgabetemperatur von z.B. 97°C. Mit Erreichen einer jeden Grenztemperatur, die über den Infrarot-Sensor 37 erfasst wird, wird von dem Mikrocomputer 36 die Abschaltung des Mikrowellenstrahlers 31 veranlasst. Nach Ablauf eines programmmäßig festgelegten Zeitintervalls schaltet 'der Mikrocomputer 36 den Mikrowellenstrahler 31 wieder ein. Damit steigt die Temperatur des Schaums wieder an und bei Erreichen der nächsten Temperaturgrenze wiederholt sich der Vorgang des zeitlich befristeten Abschaltens des Mikrowellenstrahlers 31.

In einer alternativen Ausführungsform des Hochfrequenzofens 14 wird der Mikrowellenstrahler 31 durch ein Radiofrequenzgerät ersetzt, das z.B. bei einer Radiofrequenz von 27,12 MHz arbeitet. Dieses Radiofrequenzgerät umfasst einen Hochfrequenzgenerator und zwei von diesem gespeisten Platten eines Kondensators, zwischen denen sich die mit Schaum gefüllte Form 20 befindet. Hierzu ist die eine Platte des hochfrequenzgespeisten Kondensators im Formenträger 32 unmittelbar unterhalb der Aufsetzebene 321 und die andere Platte des hochfrequenzgespeisten Kondensators oberhalb des Formenträgers 32 im Gehäuse 30 angeordnet. Das Gehäuse 30 hat wiederum Abschirmwirkung bezüglich der Radiowellen. Anstelle der Platten können auch beabstandete Stäbe verwendet werden.

In einer alternativen Ausführungsform der Erfindung wird die Temperatur des Schaums nicht durch Messung der Wärmestrahlung des im Hochfrequenzfeld sich erwärmenden Schaums erfasst, sondern mittels einer faseroptischen Temperaturmessung. Die faseroptische Temperaturmessung ist bekannt und beispielsweise beschrieben in Dr. H. Holbach "Faseroptische Temperaturmessung" Sensor-Report, Sonderdruck aus Heft 5, Oktober 1989. Diese Temperaturmessung beruht auf der Messung der Abklingzeit des von eines Phosphormaterial nach optischer Anregung abgegebenen Lumineszenzsignals, wobei jeder Abklingzeit eine bestimmte Temperatur eindeutig zuzuordnen ist. Als Phosphormaterial wird z.B. Magnesium-Fluorgermanat mit vierwertigem Mangan verwendet.Das Phosphormaterial ist an der Spitze mindestens einer Glasfaser aufgetragen, die in den Schaum geführt ist. Mit mehreren Glasfasern dieser Art kann die Temperatur an verschiedenen Stellen im Schaum erfasst werden. Eine Temperaturmessvorrichtung mit einem faseroptischen Temperaturmesser ist in der vorstehend angegebenen Literaturstelle dargestellt. Andere faseroptische Temperaturmesser arbeiten mit Gallium-Arsen anstelle von Phosphormaterial.

Die faseroptische Temperaturmessung hat den Vorteil, dass die Temperatur des Schaums sehr viel genauer erfasst wird als bei der Messung der Wärmestrahlung des Schaums und auch kein Sichtkontakt zwischen dem Schaum und einem Infrarot-Sensor vorhanden sein muss, so dass das Messfenster in der beschriebenen, den Schaum aufnehmenden Form entfallen kann und damit die Herstellung der Form kostengünstiger wird.

## Patentansprüche

1. Verfahren zum Vulkanisieren von Latex-Schaum, bei dem der Schaum in eine Form (20) aus elektrisch nicht leitendem Werkstoff eingefüllt und der in der Form (20) befindliche Schaum mit elektromagnetischer Wellenenergie im Hochfrequenzbereich auf eine vorgegebene Temperatur erwärmt wird, **dadurch gekennzeichnet, dass** während der Erwärmung fortlaufend die Temperatur des Schaums gemessen und bei Erreichen der Vorgabetemperatur die Erwärmung abgebrochen und die mit dem Schaum gefüllte Form (20) zum Ausvulkanisieren des Schaums in einen Wärmespeicher verbracht wird.

2. Verfahren nach Anspruch 1, **dadurch gekennzeichnet, dass** zur Erzeugung der Wellenenergie Radiowellen und/oder Mikrowellenstrahlung genutzt wird.

3. Verfahren nach Anspruch 1 oder 2, **dadurch gekennzeichnet, dass** als Wärmespeicher ein Heißlufttunnel (15) verwendet wird.

4. Verfahren nach einem der Ansprüche 1 - 3, **dadurch gekennzeichnet, dass** die Erwärmung des Schaums bis zur Vorgabetemperatur in Temperaturstufen vorgenommen wird und mit Erreichen einer jeden Temperaturstufe für ein vorgegebenes Zeitintervall unterbrochen wird.

5. Verfahren nach einem der Ansprüche 1 - 4; **dadurch gekennzeichnet, dass** die Form (20) während des Erwärmens bewegt wird, vorzugsweise in einer horizontalen Ebene oszillierend längs- und/oder querverschoben wird.

6. Verfahren nach einer der Ansprüche 1 - 5, **dadurch gekennzeichnet, dass** zur Temperaturmessung ein faseroptischer Temperaturmesser verwendet wird.

7. Verfahren nach einem der Ansprüche 1 - 5, **dadurch gekennzeichnet, dass** zur Temperaturmessung die Wärmestrahlung des Schaums erfasst wird.

8. Verfahren nach Anspruch 7, **dadurch gekennzeichnet, dass** zur Temperaturmessung ein Pyrometer verwendet wird, das zur Aufrechterhaltung eines konstanten Messabstandes von der Form (20) mit deren Bewegung synchronisiert wird.

9. Verfahren nach Anspruch 7 oder 8, **dadurch gekennzeichnet, dass** eine Seitenteil (213) der Form (20) mit einem Messfenster (25) aus infrarotdurchlässigem Material versehen und die Erfassung der Wärmestrahlung des Schaums mittels eines Infrarot-Sensors (37) durch das Messfenster (25) hindurch vorgenommen wird.

10. Vorrichtung zur Durchführung des Verfahrens nach einem der Ansprüche 1 - 9, **gekennzeichnet durch** einen in einem Radiowellen- oder Mikrowellenfeld angeordneten Formenträger (32) mit einer Aufsetzfläche (321) für die mit Latex-Schaum gefüllten Formen (20), **durch** eine die Schaumtemperatur erfassende Temperaturmessvorrichtung **durch** eine von dem Ausgangssignal der Temperaturmessvorrichtung gesteuerte Abschalteinrichtung für das Radio- oder Mikrowellenfeld und **durch** einen Wärmespeicher zur zeitlich befristeten Aufnahme der erwärmten Formen (20).

11. Vorrichtung nach Anspruch 9, **dadurch gekennzeichnet, dass** am Formenträger (32) ein Schwingantrieb (33) angreift, der den Formenträger (32) in eine querund/oder längsgerichtete, oszillierende Bewegung in der Ebene der Aufsetzfläche (321) versetzt.

12. Vorrichtung nach Anspruch 10 oder 11, **dadurch gekennzeichnet, dass** der Wärmespeicher ein Heißlufttunnel (15) ist.

13. Vorrichtung nach einem der Ansprüche 10 - 12, **dadurch gekennzeichnet, dass** die Temperaturmessvorrichtung einen faseroptischen Temperaturmesser aufweist.

14. Vorrichtung nach einem der Ansprüche 10 - 12, **dadurch gekennzeichnet, dass** die Temperaturmessvorrichtung einen Infrarot-Sensor (37) aufweist, der die Wärmestrahlung des Schaums durch ein in der Form (20) vorhandenes Messfenster (25) aus infrarotdurchlässigem Material hindurch misst.

15. Vorrichtung nach Anspruch 11 und 14, **dadurch gekennzeichnet, dass** der Infrarot-Sensor (37) starr mit dem Formenträger (32) gekoppelt ist.

16. Form aus einem elektrisch nichtleitenden, vorzugsweise nichtmetallischen Werkstoff zur Verwendung in dem Verfahren zum Vulkanisieren von Latex-Schaum nach einem der Ansprüche 7 - 9, **gekennzeichnet durch** mindestens ein Messfenster (25) aus infrarotdurchlässigem Material.

17. Form nach Anspruch 16, **dadurch gekennzeichnet, dass** das Messfenster (25) in einem Seitenteil (213) der Form (20) angeordnet ist.
